# EUROPEAN PATENT APPLICATION

(11) **EP 4 717 631 A1**
(43) Date of publication of application: **01.04.2026**
(21) Application number: 24213843.6
(22) Date of filing: 19.11.2024
(51) Int. Cl.: B65D 90/00, B65D 90/04, B65D 90/52, B60P 3/42

(54) **APPARATUS FOR TRANSPORTING LIQUID MATERIALS**

(30) Priority: 30.09.2024 US 202418901281; 02.10.2024 DE 102024128543
(71) Applicant: Bulk Cargo Systems, LLC, Charleston, SC 29412 (US)
(72) Inventor: BUONERBA, David, 29412 Charleston (US); CUNNINGHAM, John C., 29412 Charleston (US)
(74) Representative: Reichert & Lindner Partnerschaft Patentanwälte

(57) **Abstract**

An apparatus for use in an elongated shipping container for selectively carrying solid freight and bulk liquid freight comprising a frame fixedly secured to the elongated shipping container, the frame comprising at least: two side members and at least one end member connected to the side members, a collapsible liquid container removably connected to the frame, the container having a liquid impermeable outer liner and a liquid impermeable inner bladder arranged within the outer liner, a fluid conduit in fluid communication with the inner bladder and removably connected to the frame, and at least one baffle operatively arranged to removably secured to the frame and on top of the collapsible liquid container.

## Description

### FIELD

This disclosure relates generally to a method and apparatus for transporting liquid materials, particularly bulk liquid, by vehicle and more particularly to a method and apparatus for transporting such materials in a shipping container that can also be used for transporting conventional dry materials or other non-liquid cargo. More specifically, this disclosure relates to collapsible tanks for freight containers, or shipping containers, that allow the container arranged on a transport vehicle, such as a truck trailer, ocean borne container, railroad car or container, or the like, to be converted to selectively carry solid freight or bulk liquid freight.

### BACKGROUND

Previously used containers, particularly containers that are cleaned and inspected between uses must provide access to the inside of the container to permit a person to enter the container and clean the interior thereof. Typically, such containers have used a man port on the upper surface of the container through which a person can enter to clean and inspect the container. Thus, the container must be high enough, and the man port big enough to permit entry and cleaning. Increasing the size of a container raises the center of gravity of that container and makes it less stable than desired.

In addition, the transportation of liquids in containers that are attached to a vehicle rather than rigid containers that form an integral part of the vehicle can lead to instability issues associated with sloshing of the liquid. In extreme cases, the sloshing can cause problems in controlling the vehicle. Known transport systems fail to address these problems.

A variety of collapsible tanks of different types are directed to transporting liquid cargo, e.g., the collapsible tanks disclosed in U.S. Pat. Nos. 6,015,055 (Bonerb et al.), 6,065,265 (Stenekes), 6,131,756 (Bonerb et al.), 6,216,900 (Bonerb et al.), 6,299,437 6,299,437, and 8,132,686 (Buonerba et al.), and 10,137,809 (Postek et al.) While the collapsible containers described in these patents have been successful to varying degrees, and have provided some advantages over liquid transfer vessels used in the past, there remains a need for containers that are especially adapted for use in transporting liquids, including but not limited to liquid food/beverage products and liquid chemicals, which containers are inexpensive, are extremely clean, eliminate the need for cleaning between loads, are lighter than previously known containers thereby permitting transport of higher payloads, are made from recyclable materials, have a low carbon footprint, have a low center of gravity, reduce or eliminate the effects of sloshing of liquids during transport, improve driver safety and can be more easily, more safely, and more quickly converted between a liquid carrier and a dry freight carrier. The present disclosure addresses improving these characteristics of containers for transporting liquids.

As described above, containers for transporting liquids, especially containers convertible between liquid transport and dry freight transport have employed a reusable (after cleaning) flexible inner liner and a flexible outer shell attached to top and bottom frame portions of a selectively deployable tank. The tanks so constructed have been configured with a man-sized opening in the top of the inner liner to permit a person to enter the tank for cleaning and have necessarily been high enough for a person to enter and clean the tank from the inside. The center of gravity of such tanks is higher than would otherwise be desirable because of the height requirements for cleaning. More specifically, local occupational safety and health regulations in some countries have required that such tanks be at least four (4) feet high to permit a person to enter the tank for cleaning and/or inspection for cleanliness.

Cleaning the known tank configurations between uses adds considerable extra expense. The cost to enter and clean a tank can be in excess of hundreds of dollars per cleaning. The cost is due in part to the need to reposition the carrier from the liquid cargo discharge location to a certified wash facility and subsequently to a dry freight loading point. In addition to the actual wash charge, the time to dry the cleaned tank, and time to seal the openings, valves, and hoses for reloading increase the cost.

During cleaning of previously used tanks, a person may be required to climb to the top of a conventional tanker, possibly twelve (12) feet or higher, to either enter the tank through the man way for inspection or to take samples of the product prior to unloading. This operation is unnecessary using embodiments of the present disclosure.

In addition to the expense, cleaning known tanks requires considerable amounts of water, often potable water, and cleaners, and produces effluents that must be disposed of in accordance with local requirements. In short, this cleaning operation further increases the cost of using known containers. As with other issues described above, embodiments of the present disclosure overcome these issues.

Known tanks weigh hundreds of pounds or more and this weight limits the amount of liquid that can be carried in trucks with a fixed maximum gross weight. In other terms, weight consumed by the tank itself decreases the amount of transportable product.

Known reusable tanks have been fabricated in various standard sizes that do not always match the amount of liquid transported in any particular load. This creates the possibility of transporting a less than full tank, which in turn, promotes liquid sloshing as the transport vehicle moves. In many cases, this reduces vehicle stability. The Postek *et al.* solution is an example of a tank apparatus that does not address the issues of vehicle stability if such tank apparatus was transported via a vehicle. Aspects of the present disclosure use several techniques for reducing the effects of sloshing liquid during transit.

One solution to many of the aforementioned disadvantages is disclosed at length in U.S. Patent No. 11,643,003, issued May 9, 2023, which patent is incorporated by reference herein in its entirety. However, in a desire to solve these problems, the invention disclosed therein is rather complex, meaning, the invention discloses a movable and collapsible frame. The complexity of assembly and disassembly, for the respective transportation of wet and dry goods, makes operation difficult-especially for a single operator. Further, the liner disclosed therein is only water-tight on the inner layer thereof, and not the outer layer, potentially leading to leakage or spillage issues during transit. Lastly, such solution only nominal lowers,

As can be derived from the variety of devices and methods directed at transporting liquid cargo, many means have been contemplated to accomplish the desired end, i.e., safe, sanitary, and cost-effective shipments. Heretofore, tradeoffs between safety, convenience and cost were required.

Thus, there still exist a need for device and/or apparatus that utilizes fewer overall components-thereby decreasing overall weight, provides a more reliable leak-proof or spill-proof liquid storage, can be easily assembled/disassembled by a single operator, includes a more secure valve mechanism for filling/emptying the liquid storage therein, and a simpler solution to reducing liquid slosh during transportation in a removable manner.

Moreover, there still is a need for a device and/or apparatus that further increases the safety of transporting liquid cargo, which device and/or apparatus lowers a center of the liquid container by utilizing substantially more width of the freight container such as a truck trailer, ocean borne container, railroad car or container, or the like, thereby increasing the stability of the vehicle transporting the freight container.

### SUMMARY

According to aspects illustrated herein, there is provided an apparatus for use in an elongated shipping container, e.g., a shipping container on a trailer, for selectively carrying solid freight and bulk liquid freight comprising a frame fixedly secured to and within the shipping container, the frame comprising at least: two side members and at least one end member connected to the side members, a collapsible liquid container removably connected to the frame, the container having a liquid impermeable outer liner and a liquid impermeable inner bladder arranged within the outer liner, a fluid conduit in fluid communication with the inner bladder and removably connected to the frame, and at least one baffle operatively arranged to be removably secured at least partially within the frame and on top of the collapsible liquid container.

In some embodiments, the aforementioned apparatus may further comprise a second baffle (i.e., a first and second baffle) operatively arranged to removably secure to the frame and on top of the collapsible liquid container, whereas the at least one baffle (i.e. the first baffle) and the second baffle are spaced apart. Alternatively, the aforementioned apparatus may further comprise a third and fourth baffle, where each of the first, second, third, and fourth baffle may have at least one concave face thereon.

In one aspect, the present invention may comprise an apparatus for use in a shipping container for selectively carrying solid freight and bulk liquid freight, the apparatus including a first side frame extending longitudinally with respect to the shipping container and fixedly secured thereto, a second side frame extending longitudinally with respect to the shipping and fixedly secured thereto, a front frame positioned between the first and second side frames, a collapsible liquid container operatively arranged substantially between the first and second side frames, the liquid container further comprising: a liquid impermeable outer liner; a liquid impermeable inner bladder arranged within the outer liner; and, a fluid conduit in fluid communication with the inner bladder, a rear fame removably affixed to the first and second side frames opposite the front frame, and at least one baffle operatively arranged to be positioned between the first and second side frames and on top of the collapsible liquid container, wherein the collapsible liquid container is adapted to be removably pinned at least partially within the frame via the at least one baffle.

In some configurations, the aforementioned apparatus further comprises a first baffle operatively arranged to be positioned between the first and second side frames and on top of the collapsible liquid container, and a second baffle operatively arranged to be positioned between the first and second side frames and on top of the collapsible liquid container and spaced apart from the first baffle.

In one possible embodiment, each of the aforementioned first and second baffles comprise: a top face and a bottom face bounded by a pair of side faces; a pair of concave faces disposed between the top and bottom faces; and, a channel arranged within the pair of concave faces and the bottom face.

In some embodiments, each of the first and second baffles may also comprise a channel disposed within said top and said pair of side faces, the channel operatively arranged to accept a support member therein.

In a further possible configuration, the aforementioned apparatus further comprises a front end baffle arranged at least partially within the side frames and proximate the front frame, the front end baffle having: a top face and bottom face bounded by a pair of side faces; a concave face disposed between the top and bottom faces and facing the rear frame; and, a rear face disposed between the top and bottom faces and facing the front frame.

In another configuration, the aforementioned apparatus further comprises a rear end baffle arranged at least partially within the side frames and proximate the rear frame, the rear end baffle having: a top face and bottom face bounded by a pair of side faces; a concave face disposed between the top and bottom faces and facing the rear frame; a rear face disposed between the top and bottom faces and facing the rear frame; and, a conduit channel disposed within the top, bottom, and concave face, wherein the conduit channel is adapted to accept at least a portion of the fluid conduit at least partially therein.

In some embodiments, the aforementioned apparatus may further comprise at least one retaining cover adapted to at least partially cover a space disposed between the side frames, the at one retaining cover retractably secured to a top surface one of the side frames and removably secured to a top surface of the opposite side frame, the at least one retaining cover further adapted to pin the at least one baffle down and onto the liquid container.

In some embodiments, the aforementioned fluid conduit further comprises a longitudinal tube portion having a first end and a second end, the first end arranged within the inner bladder and the second end extending through the inner bladder and affixed thereto, and a connection elbow extending from the first end.

In other configurations, the aforementioned fluid conduit further comprises a valve affixed to the front frame and arranged to removably secure to the connection elbow.

In some embodiments, the aforementioned apparatus further comprises a sliding plate connected to the rear frame and adapted to move vertically, the valve affixed to the sliding plate.

In other configurations, the at least one baffle is configured to absorb energy from liquid disposed in the collapsible liquid container.

In further embodiments, the baffles are comprised of one or more of an open cell foam or a closed cell foam.

In further possible configurations, the rear end baffle is comprised of one or more of an open cell foam or a closed cell foam.

In even further possible configurations, the front end baffle is comprised of one or more of an open cell foam or a closed cell foam.

In still further possible configurations, the aforementioned apparatus may further comprise a retraction line removably secured to the liquid impermeable outer liner, the retraction line adapted to be secured to an inner surface of a wall of the shipping container, thereby allowing the liquid impermeable outer liner to be pulled along the retraction line in a direction towards the front frame when the liquid impermeable inner bladder is empty.

Generally, the first, second, third, and fourth baffles (**300, 302, 700, 800**) of the aforementioned apparatus (**100**) are generally configured to absorb energy from liquid disposed in the collapsible liquid container (**200**), thereby dampening a liquid sloshing effect from the liquid disposed in the collapsible liquid container (**200**) produced when the shipping container (**2**) is in motion. Further, the first, second, third, and fourth baffles (**300, 302, 700, 800**) of the aforementioned apparatus (**100**) each include at least one concave face, which concave faces are designed to redirect liquid or fluid within the liquid container in one or more of a direction away from the concave face or downwardly.

These and other objects, features, and advantages of the present disclosure will become readily apparent upon a review of the following detailed description of the disclosure, in view of the drawings and appended claims.

### BRIEF DESCRIPTION OF THE DRAWINGS

Various embodiments are disclosed, by way of example only, with reference to the accompanying schematic drawings in which corresponding reference symbols indicate corresponding parts, in which:
Figure **1** is a perspective view of a shipping container, partly in phantom, showing a frame having a fluid container therein in accordance with one aspect of this disclosure configured for transporting liquid cargo;
Figure **2A** is a rear view of the invention shown in Figure **1****;**
Figure **2B** is a rear view of the invention shown in Figure **2A** with retaining covers removably attached to the frame;
Figure **2C** is a rear view of the invention shown in Figure **2A** with the baffles removed and an empty fluid container removably connected to a retraction line attached to a wall of the shipping container;
Figure **3A** is a skeleton perspective view of a baffle of the invention shown in Figure **1****;**
Figures **3B** through **3D** are a perspective views of end baffles of the invention shown in Figure **1****;**
Figure **4** is a partial perspective view of the invention in Figure **2B****,** specifically showing the retaining cover and its respective attachment mechanisms;
Figure **5A** is a cross-sectional view of the frame and fluid container taken generally along line **5-5** in Figure **1****;**
Figure **5B** is an enlarged portion taken from Figure **5A** generally illustrating a fluid conduit;
Figure **5C** is an enlarged portion taken from Figure **5A** generally illustrating one of the middle baffles and its respective passageway; and,
Figures **6A** and **6B** are cross-sectional views from Figure **5A** generally showing fluid movement within the fluid container.

### DETAILED DESCRIPTION

At the outset, it should be appreciated that like drawing numbers on different drawing views identify identical, or functionally similar, structural elements. It is to be understood that the claims are not limited to the disclosed aspects.

Furthermore, it is understood that this disclosure is not limited to the particular methodology, materials and modifications described and as such may, of course, vary. It is also understood that the terminology used herein is for the purpose of describing particular aspects only, and is not intended to limit the scope of the claims.

Unless defined otherwise, all technical and scientific terms used herein have the same meaning as commonly understood to one of ordinary skill in the art to which this disclosure pertains. It should be understood that any methods, devices or materials similar or equivalent to those described herein can be used in the practice or testing of the example embodiments. The assembly of the present disclosure could be driven by hydraulics, electronics, pneumatics, and/or springs.

It should be appreciated that the term "substantially" is synonymous with terms such as "nearly," "very nearly," "about," "approximately," "around," "bordering on," "close to," "essentially," "in the neighborhood of," "in the vicinity of," etc., and such terms may be used interchangeably as appearing in the specification and claims. It should be appreciated that the term "proximate" is synonymous with terms such as "nearby," "close," "adjacent," "neighboring," "immediate," "adjoining," etc., and such terms may be used interchangeably as appearing in the specification and claims. The term "approximately" is intended to mean values within ten percent of the specified value.

It should be understood that use of "or" in the present application is with respect to a "non-exclusive" arrangement, unless stated otherwise. For example, when saying that "item x is A or B," it is understood that this can mean one of the following: (1) item x is only one or the other of A and B; (2) item x is both A and B. Alternately stated, the word "or" is not used to define an "exclusive or" arrangement. For example, an "exclusive or" arrangement for the statement "item x is A or B" would require that x can be only one of A and B. Furthermore, as used herein, "and/or" is intended to mean a grammatical conjunction used to indicate that one or more of the elements or conditions recited may be included or occur. For example, a device comprising a first element, a second element and/or a third element, is intended to be construed as any one of the following structural arrangements: a device comprising a first element; a device comprising a second element; a device comprising a third element; a device comprising a first element and a second element; a device comprising a first element and a third element; a device comprising a first element, a second element and a third element; or, a device comprising a second element and a third element.

Moreover, as used herein, the phrases "comprises at least one of" and "comprising at least one of" in combination with a system or element is intended to mean that the system or element includes one or more of the elements listed after the phrase. For example, a device comprising at least one of: a first element; a second element; and, a third element, is intended to be construed as any one of the following structural arrangements: a device comprising a first element; a device comprising a second element; a device comprising a third element; a device comprising a first element and a second element; a device comprising a first element and a third element; a device comprising a first element, a second element and a third element; or, a device comprising a second element and a third element. A similar interpretation is intended when the phrase "used in at least one of:" is used herein. Furthermore, as used herein, "and/or" is intended to mean a grammatical conjunction used to indicate that one or more of the elements or conditions recited may be included or occur. For example, a device comprising a first element, a second element and/or a third element, is intended to be construed as any one of the following structural arrangements: a device comprising a first element; a device comprising a second element; a device comprising a third element; a device comprising a first element and a second element; a device comprising a first element and a third element; a device comprising a first element, a second element and a third element; or, a device comprising a second element and a third element.

Broadly, embodiments of the present disclosure comprise a substantially fixed frame having a collapsible liquid container comprising an outer liner and an inner bladder, the inner bladder arranged to receive a fluid therein, where both the outer liner and inner bladder are liquid impermeable, at least one baffle, and a fluid conduit in fluid communication with the inner bladder. It should be appreciated that the present disclosure may include additional elements, e.g., a pair of baffles, a securement mechanism for the at least one bladder, at least one removable end frame, fluid conduit having a valve and a inlet/outlet tube in communication with the inner blade where the valve is arranged to removably secure to the inlet/outlet tube, and means to removably secure the collapsible liquid container to the frame.

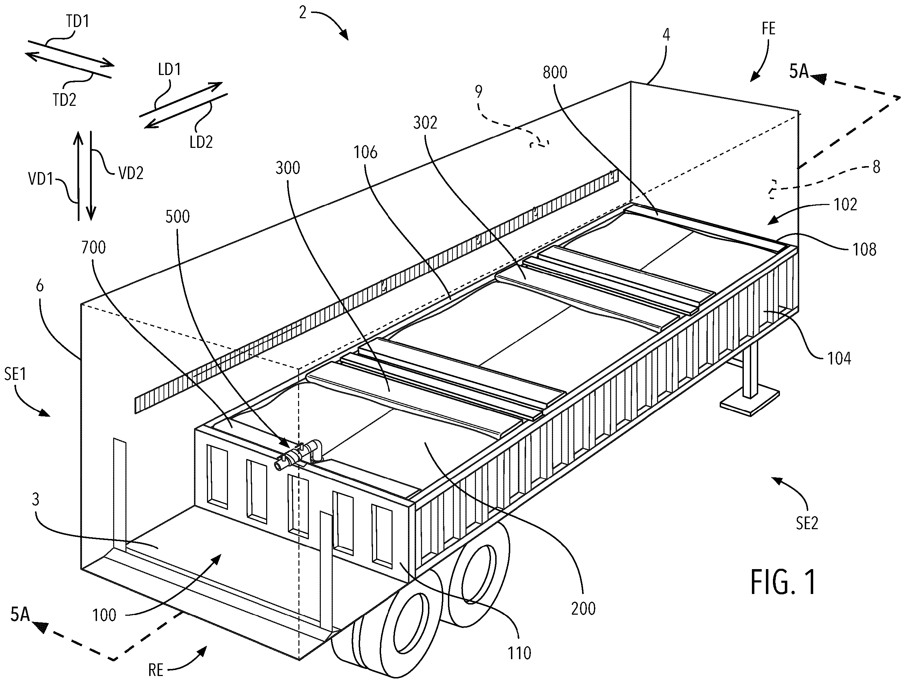

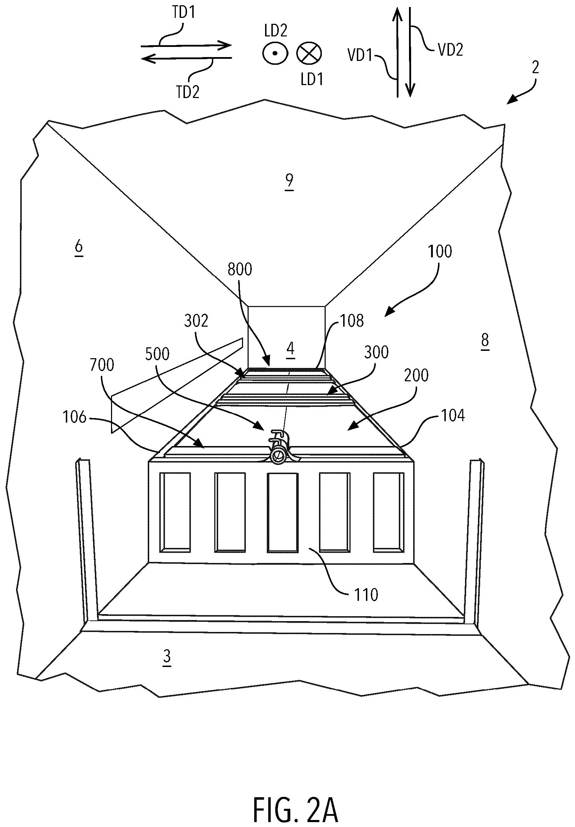

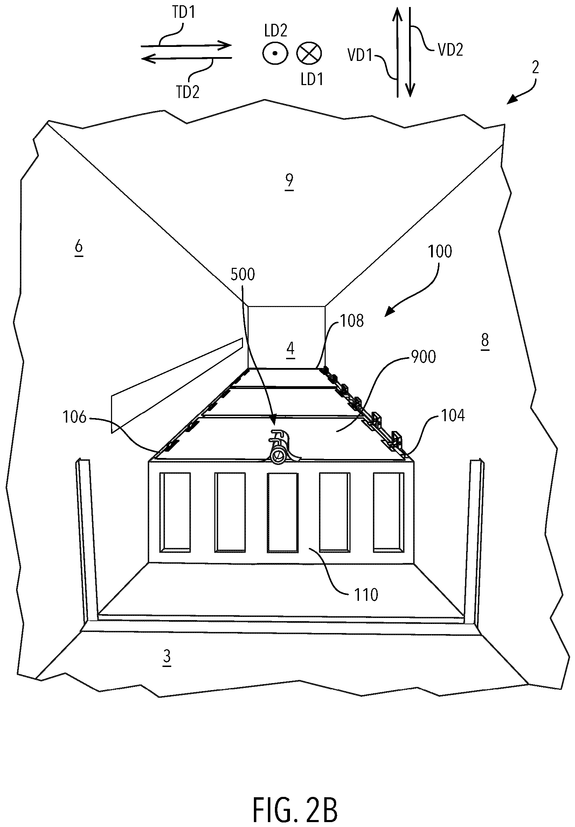

Adverting now to the figures, an exemplary embodiment of a present apparatus for transporting liquid is illustrated in Figures **1** through **2B****,** specifically Figure **1** generally shows a perspective view of the apparatus arranged within an embodiment of a shipping container, particularly a shipping container arranged to be transported by a tractor trailer. Figures **2A** and **2B** generally show a rear view of the same, where Figure **2B** illustrates retaining covers arranged on a frame of the apparatus.

Liquid transporting tank apparatus **100** (hereinafter "apparatus"), in accordance with an aspect of the present disclosure, is illustrated as it could be installed in shipping container **2** of a tractor-trailer truck (not shown). "Shipping container" is intended to mean a "freight container," "cargo container," "intermodal container," "iso container," "sea container" or "ocean container," "sea can" or "c-can," "container van" or "dry van," "insulated container," "double door container," "swap body container," and the like, and such terms are intended to be interchangeable. Collapsible liquid container **200** (hereinafter "container") is removably contained within frame **102,** whereas frame **102** comprises a plurality of interconnected frame-members disposed within the shipping container, preferably spanning at least a substantial portion between front wall **4** and rear wall **3** and also spanning between sidewalls **6** and **8.** In some embodiments, container **200** is contained within first and second sidewalls **104** and **106,** respectively, and front and rear end walls **108** and **110,** respectively, that together form a generally rectangular enclosure, i.e., frame **102.** Preferably, sidewalls **104** and **106** are fixedly attached to the shipping container body, i.e., at least one of sidewalls **6** and **8** and floor **3,** thereby affording a maximum distance therebetween in transverse directions **TD1** and **TD2,** i.e., a distance between sidewalls **6** and **8.** It could be said that frame **102** may be comprised of sidewalls **104** and **106,** end walls **108** and **110,** and floor **3,** such that frame **102** is generally a rectangular enclosure having a bottom or a floor. It should be appreciated that frame **102** could separately include a floor member being connected to one or more of sidewalls **104** and **106** and end walls **108** and **110.** Preferably, at least sidewalls **104** and **106** are fixedly secured to the shipping container body, e.g., one or more of wall **6,** wall **8,** or floor **3.**

In other possible configurations, front end wall **108** may be formed from front wall **4** of shipping container **2** or a separate front wall panel or member may be used. When front end wall **108** is formed by front wall **4** of shipping container **2,** side walls **104** and **106** should be positioned that the front ends of side walls **104** and **106** (i.e., the ends proximate front end **FE**) are close to or in contact with front wall **4** of shipping container **2.** As shown in Figure **1** and in a preferred configuration, the rear ends of side walls **104** and **106** (i.e., the ends proximate rear end **RE**) do not extend to the terminating end of the shipping container body proximate rear end **RE,** thus, providing an area on floor **3** where a user may stand within the shipping container body and access apparatus **100.** In some configurations, rear end wall **110** may be removable or may be comprised of a gate-like configuration such that the aforementioned space proximate rear end **RE** is needed for opening and closing thereof (similar to the configurations described in U.S. Patent No. 11,643,003).

In a preferred aspect, container **200** includes fluid conduit **500** in fluid communication therewith. Fluid conduit **500** is attached to container **200** and rear wall **110,** preferably on a top surface or end thereof, such that fluid conduit **500** is raised above floor **3** of the shipping container body. Fluid conduit **500** is arranged for filling and emptying of container **200** and is detailed further, *infra.*

In some embodiments, container **200** is divided into two or more sections, e.g., three sections, by baffles **300** and **302** that are positioned transversely in container **200,** as shown in Figure **1****.** Baffles **300** and **302** extend substantially from the top of frame **102,** i.e., first and second sidewalls **104** and **106,** respectively, and front and rear end walls **108** and **110,** respectively, downwardly towards base or floor **3** of shipping container **2.** Baffles **300** and **302** may extend beyond respective top surfaces of sidewalls **104** and **106,** i.e., a greater distance in vertical direction **VD1.** In a preferred embodiment, container **200** further includes end baffles, rear end baffle **700** and front end baffle **800,** where front end baffle **800** is arranged between sidewalls **104** and **106** and proximate front end wall **108,** and where rear end baffle **700** is arranged between sidewalls **104** and **106** and proximate rear end wall **110.** Thus, one section of container **200** is formed between rear end baffle **700** and baffle **300,** a second section of container **200** is formed between baffles **300** and **302,** and a third section of container **200** is formed between baffle **302** and front end baffle **800.** Baffles **300, 302, 700,** and **800** are discussed further, *infra.*

In reference to Figure **2B****,** the aforementioned baffles (e.g., baffles **300, 302, 700,** and **800** in Figures **1** and **2A**) are arranged to be placed between sidewalls **104** and **106** such that the baffles rest on the top of container **200.** When container **200** is filled within a liquid, the liquid therein would displace the baffles. To avoid this, a plurality of retainer covers, or retaining covers **900,** are removably connected to sidewalls **104** and **106** and over the baffles, thereby maintaining the baffles in a position on top of filled container **200.** Retaining covers **900** are described further *infra.*

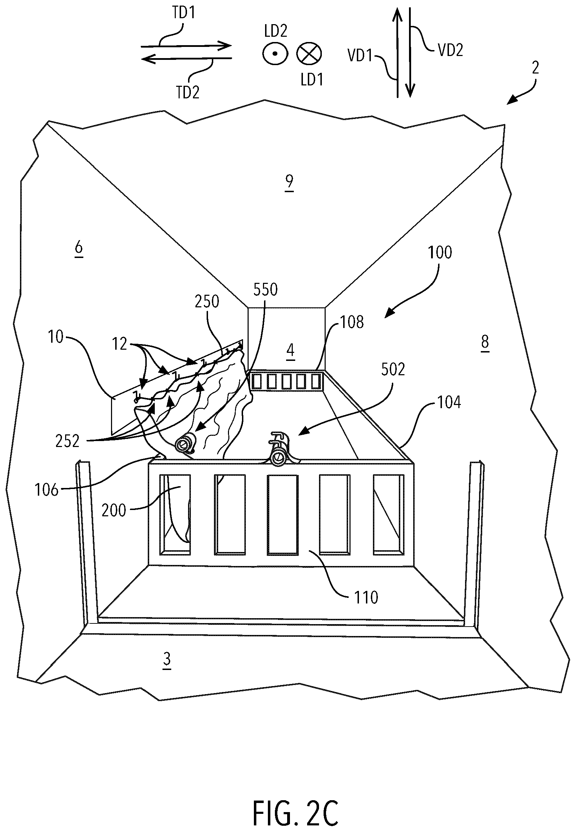

Figure **2C** shows a rear view of apparatus **100** arranged within shipping container **2.** The baffles, shown generally in Figures **1** and **2A****,** are removed from apparatus **100** and container **200** is show substantially empty. Shipping container **2** may include at least one of rail **10,** mounted one either of side walls **6** or **8,** or a pair of rails mounted on each of sides walls **6** or **8.** It should be appreciated that rail **10** is generally known within the art of shipping containers or trailers, as the rail provides a plurality of mounting locations that can accept hooks, dividers, spacers, shelves (across a pair of rails on opposite side walls), and the like. As shown in Figure **2C****,** hooks **12** are removably mounted on rail **10** on sidewall **6.** The empty liquid container, container **200,** is removably attached to retraction line **250,** where line **250** is removably attached to hooks **12,** e.g., resting on each of hooks **12** and having its respective terminating ends secured to one or more of a pair of end hooks of hooks **12** or rail **10.** Retraction line **250** may comprise a steel rope, a wire rope, etc., such that clips **252** may be removable secured, in a translatable manner, to retraction line **250.** Clips **252** may take a plurality of forms, such as but not limited to carabiner clips, locking connector loops, cable seals, etc. Clips **252** are preferably removably attached to an edge of container **200,** where a plurality of one or more of grommets or apertures may be arranged proximate an edge of container **200.** This configuration allows empty container **200** to be removably secured to retraction line **250** such that empty container **200** may be translated along retraction line **250** in a direction towards front wall **4** of shipping container **2,** thus creating space within shipping container **2** and allowing a single operator to "collapse" or "condense" empty container **200.** Inversely, empty container **200** may be "expanded" or "elongated" in direction from front end wall **4** to rear end wall **110** of apparatus **100,** where inlet/outlet tube **550** of empty container **200** can be connected to valve **502,** forming fluid conduit **500,** in preparation for filling.

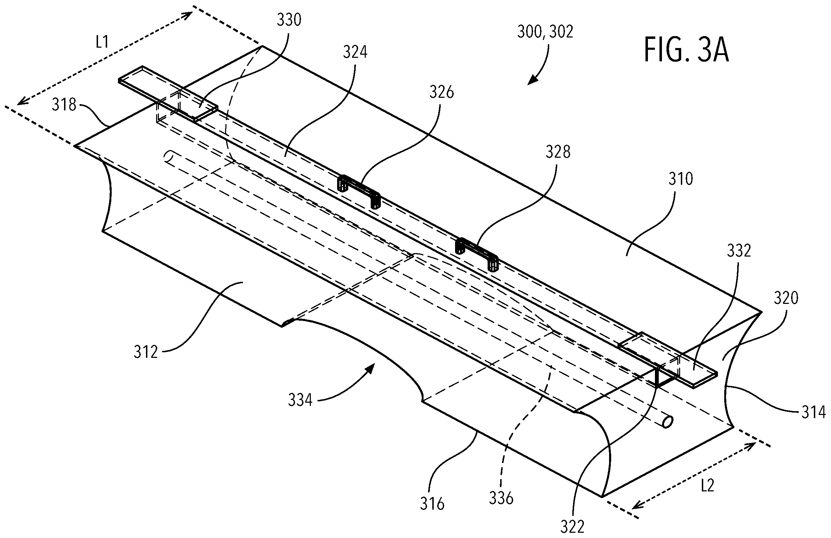

In reference to Figures **3A** through **3C****,** the present invention (e.g., apparatus **100** shown in Figure 1) is intended to utilize one or more of baffles **300, 302, 700,** or **800.** Preferably, in a nonlimiting fashion, the apparatus utilizes each of baffles **300, 302, 700,** and **800,** as shown in Figures **1** and **2A****.**

Baffles **300** and **302,** i.e., the middle baffles, are illustrated in Figure **3A** and are substantially identical. The middle baffles may comprise top face **310,** bottom face **316,** first concave face **312,** second concave face **314,** first side face **318,** and second side face **320.** Top face **310** has length **L1** and bottom face **316** has length **L2,** where **L1** is greater than **L2.** This arrangement makes the portion of concave faces **312** and **314** extending downwardly from top face **310** overhang or extend past the portion of concave face **312** and **314** extending upwardly from bottom face **316.** Concave faces **312** and **314** are curvilinear, thereby forming a redirect for liquid movement in a direction away from the respective concave faces. Channel **322** is disposed within top face **310** and is arranged to house support beam **324** therein. Preferably, support beam **324** is fixedly secured within channel **322** and support beam **324** is preferably hollow having a polygonal cross-section to withstand compressive forces applied from the direction of one or more of side faces **318** and **320.** Support beam **324** may include handles **326** and **328** attached thereto and extending therefrom. In a preferable embodiment, support beam **324** may also include extensions **330** and **332** fixedly secured on a top surface thereof and extending past the respective terminal ends of support beam **324.** Extensions **330** and **332** may resemble rigid plates and are designed to rest on the top of each side wall of the frame (*See* Figure **1****,** side walls **104** and **106** of frame **102**), such that support beam **324** is positioned between the side walls of the frame, thereby preventing the side walls from collapsing in a direction towards each other. The middle baffles may also include passageway **334,** e.g., an arcuate cutout disposed within bottom face **316,** concave face **312** and concave face **314.** In some embodiments, the middle baffles may also include a secondary support member embedded therein, e.g., internal support member **336,** which may be comprised of a solid and/or hollow rod, or could be substantially similar to support beam **324.**

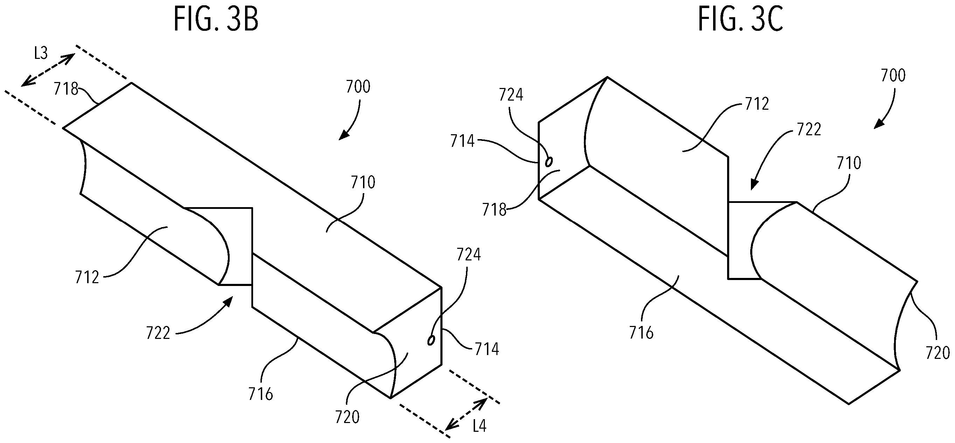

Figures **3B** and **3C** illustrate perspective views of rear end baffle **700.** As shown in Figure **1****,** rear end baffle **700** is arranged to be removably placed proximate rear end **110** of frame **102.** Rear end baffle **700** generally comprises top face **710,** bottom face **716,** concave face **712,** and planar face **714** (or back face). Top face **710** has length **L3** and bottom face **716** has length **L4,** where **L3** is greater than **L4.** This arrangement makes the portion of concave face **712** extending downwardly from top face **710** overhang or extend past the portion of concave face **712** extending upwardly from bottom face **716.** Concave face **712** is curvilinear, thereby forming a redirect for liquid movement in a direction away from the respective concave face. Rear end baffle **700** may also include cutout **722** disposed within one or more of concave face **712,** top face **710,** and bottom face **716** and is adapted to allow a portion of the fluid conduit of the present invention to rest at least partially therein, described further infra. Additionally, rear end baffle **700** may also include a support member embedded therein, e.g., internal support member **724,** which may be comprised of a solid and/or hollow rod, or could be substantially similar to support beam **324,** shown in Figure **3A****.**

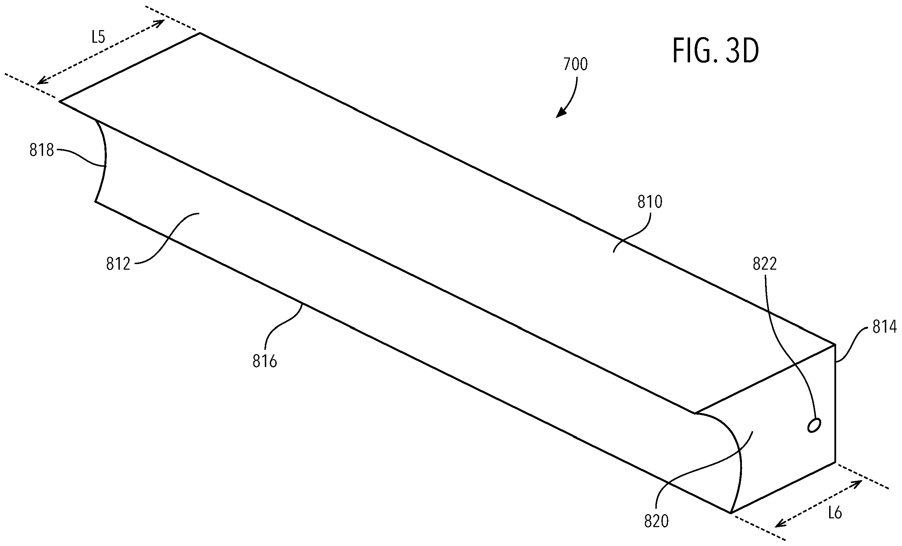

Figure **3D** illustrates a perspective of front end baffle **800.** As shown in Figure **1****,** front end baffle **800** is arranged to be removably placed proximate front end **108** of frame **102.** Front end baffle **800** generally comprises top face **810,** bottom face **816,** concave face **812,** and planar face **814** (or back face). Top face **810** has length **L5** and bottom face **816** has length **L6,** where **L5** is greater than **L6.** This arrangement makes the portion of concave face **812** extending downwardly from top face **810** overhang or extend past the portion of concave face **812** extending upwardly from bottom face **816.** Concave face **812** is curvilinear, thereby forming a redirect for liquid movement in a direction away from the respective concave face. Additionally, front end baffle **800** may also include a support member embedded therein, e.g., internal support member **822,** which may be comprised of a solid and/or hollow rod, or could be substantially similar to support beam **324,** shown in Figure **3A****.**

In reference to Figure **3A** through **3D****,** it should be appreciated that any material known, or hereinafter developed may be used to construct the baffles (e.g., baffles **300, 302, 700,** and **800**) of apparatus **100** so long as the baffles have energy-absorbing characteristics, i.e., when liquid within container **200** applies force onto one or more of the surfaces of the baffles, particularly the concave faces, the baffles may absorb those forces, or dampen those forces, and also redirect those forces away from the respective concave face. In a preferred configuration, the baffles may be comprised of a high-density foam material, open or closed cell, or any other suitable material capable of absorbing the energy of shifting liquid within the tank and may be formed in various thicknesses. Each of baffles **300, 302, 700,** and **800** may be monolithic, or can be comprised of multiple sections formed together.

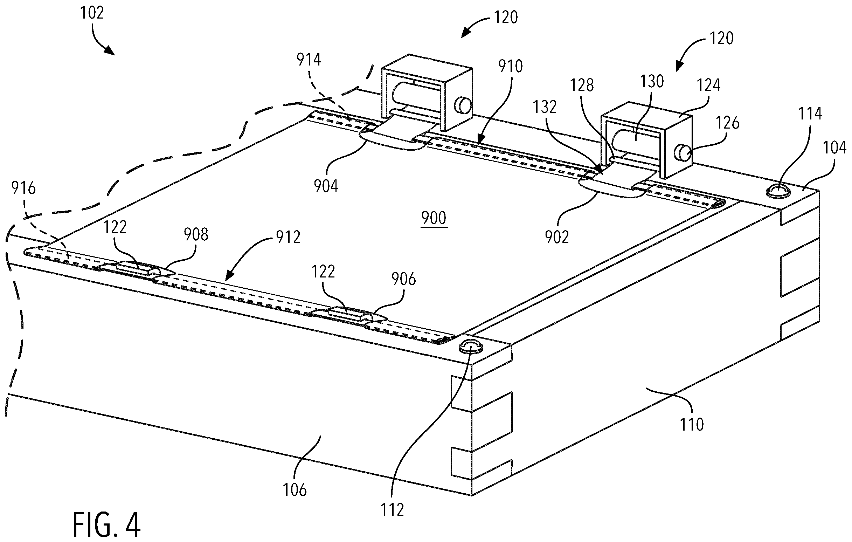

Figure **4** is a partial perspective view of frame **102** of the apparatus, specifically showing retaining cover **900** and its respective attachment mechanisms. Figure **4** also illustrates pins **112** and **114** which allow rear end wall **110** to be removed from side walls **104** and **106.**

As previously discussed *supra* and in view of Figure **2B****,** retaining cover **900** is the primary element which retains all of the baffles within frame **102.** Each of retaining cover **900** requires a pair of adjustable connectors **120** and a pair of hooks **122,** e.g., a ratio of 1:2:2, respectively. Although the representative configuration in Figure **4** illustrates the aforementioned ratio, one having skill in the art will appreciate that the quantity of covers, adjustable connectors, and hooks, is variable and foreseeably can be modified to reduce/increase components as necessary. Retaining cover **900** includes slots **902, 904, 906,** and **908,** where slots **902** and **904** allow support member **914,** contained within sleeve **910,** to be visible and accessible. Sleeve **910** may be formed by "rolling" a longitudinal end of retaining cover back onto itself and affixing that end to form sleeve **910.** In a preferred configuration, sleeve **910** is closed at its terminating ends, thereby maintaining support member **914** therein. Support member **914** may comprise a rigid rod, beam, etc. Similarly, slots **906** and **908** allow support member **916,** contained within sleeve **912,** to be visible and accessible. Sleeve **912** may be formed by "rolling" a longitudinal end of retaining cover back onto itself and affixing that end to form sleeve **912.** In a preferred configuration, sleeve **912** is closed at its terminating ends, thereby maintaining support member **916** therein. Support member **916** may comprise a rigid rod, beam, etc.

In a preferred embodiment, adjustable connector **120** may comprise housing **124,** which substantially is U-shaped and includes spool **126** rotatably secured therethrough. Spool **126** is configured to house tether **130,** allowing an excess of tether **130** to be stored within housing via rolling onto spool **126.** Tether **130** is attached to spool **126** at one end (not visible) and includes loop **132** at its opposite end. Preferably, the end of tether **130** that has loop **132** is fed underneath rod **128** which assists in preventing upward movement of attached retaining cover **900.** Adjustable connectors **120** are disposed on a top of surface of one of side walls **104** or **106.** Preferably, loop **132** is permanently wrapped around an exposed portion of support member **914,** e.g., the portions of support member **914** within one or more of slots **902** or **904,** however, alternative attachment methods, such as removable options, are contemplated within the scope of the appending claims.

Hooks **122** are disposed on a top surface of one of side walls **104** or **106,** preferably opposite adjustable connector **120.** Hooks **122** are arranged to engage an exposed portion of support member **916,** e.g., the portions of support member **916** within one or more of slots **906** and **908.** Once hooks **122** are engaged with support member **916,** the spools of adjustable connectors **120** may all be tightened, thereby pulling retaining cover **900** taught between hooks **122** and adjustable connectors **120.** As such, adjustable connectors **120,** specifically, spool **126,** may include a rachet mechanism which prevents slack of tether **130** from being released until the rachet mechanism is disengaged. In alternative embodiments, spools of adjacent adjustable connectors may be connected, such that both spools may be wound/unwound at the same time.

Preferably, retaining cover **900** is a Kevlar^{®} fabric, or an equivalent having substantially comparable strength, sheer-resistant, and tear-resistant, characteristics. Since retaining cover **900** is configured to maintain the baffles in a position over a filled fluid tank within the frame, the hooks, the tethers, the adjustable connectors with their respective components, are all heavy-duty and preferably metal.

In reference to Figures **2C** and **4****,** hooks **12** of rail **10** (when placed on side wall **8**) could be used to removably store retaining cover **900,** such that hooks **12** could engage support member **916,** raising retaining cover **900** and keep it out of frame **102** for when frame **102** is used for dry goods (e.g., when the liquid container is empty and removed therefrom).

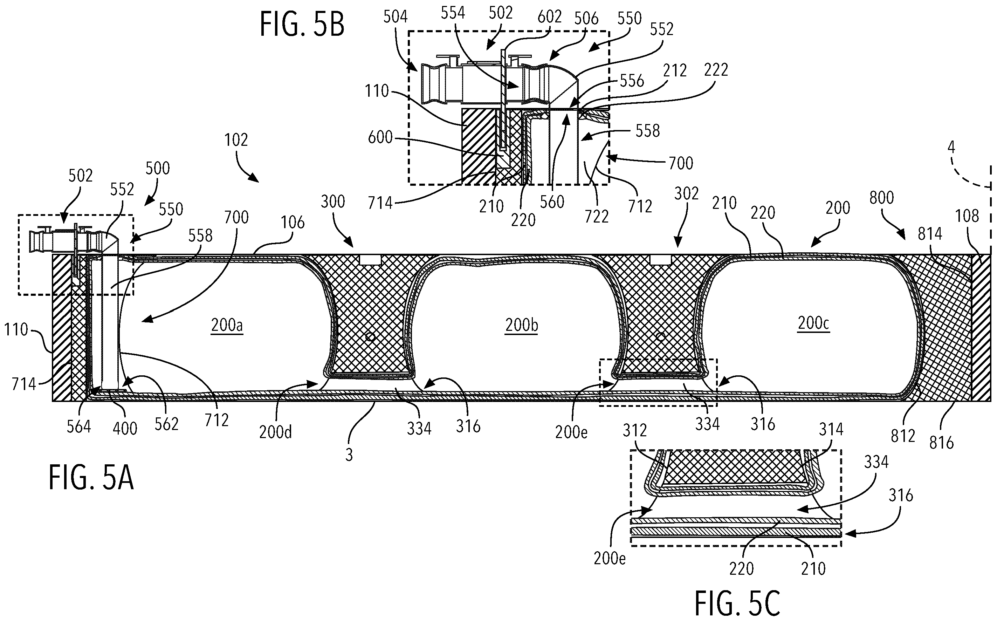

The following description should be taken in view of Figures **1** through **4** and in view of Figures **5A** through **5C.** Figure **5A** shows a cross-sectional view of apparatus **100** taken generally along line **5A-5A** in Figure 1, and Figures **5B** and **5C** generally illustrate enlarged portions taken from Figure **5A****.** As shown in Figure **5A****,** fluid container **200** is generally depicted as being filled with a fluid, e.g., bulk liquid and/or fluid cargo, positioned within frame **102,** and pinned within frame **102** by baffles **300** and **302**-along with a plurality of retaining members (*See* Figure **4**), holding baffles **300, 302, 700,** and **800** within frame **102,** which retaining members are removed for clarity of illustration. Baffles **300, 302, 700,** and **800** substantially form sections within fluid container **200.** Baffles **700** and **300** form section **200a,** baffles **300** and **302** form section **200b,** and baffles **302** and **800** form section **800.** Passageway **334** of each of baffles **300** and **302** creates passages **200d** and **200e,** where passage **200d** fluidly connects sections **200a** and **200b** and passage **200e** fluidly connects sections **200b** and **200c.** As generally illustrated in Figures **5A** and **5C****,** bottom face **316** of both baffles **300** and **302** is placed on top of fluid container **200,** specifically outer line **210,** in other words, baffles **300** and **302** preferably do not rest on floor **3** of shipping container **2** (*See* Figure **1**), whereas baffles **700** and **800** preferably rest on floor **3.**

In a preferred embodiment, fluid container **200** is comprised of a liquid impermeable outer liner, e.g., outer liner **210** and a liquid impermeable inner bladder, e.g., inner bladder **220,** arranged within outer liner **210.** As such, outer liner **210** may include a sealable opening disposed along its length, allowing liner blader **220** to be placed therein. This opening may include a waterproof zipper apparatus allowing the opening of outer line **210** to be closed while maintaining a liquid impermeable configuration. As shown in Figure **5B****,** outer liner **210** includes seal **212** which is arranged to sealable wrap around a portion of fluid conduit specifically, inlet/outlet tube **550,** in a water-tight manner. Similarly, inner bladder **220** includes seal **222** which is arranged to sealable wrap around a portion of fluid conduit **500,** specifically, inlet/outlet tube **550,** in a water-tight manner. Seal **222** could be fixedly secured to an outer surface of inlet/outlet tube **550** via known methods such as ultrasonic welding or alternative contemplated within the art, so long as the water-tight configuration is maintained. Alternatively, seal **222** could be affixed to a flange circumscribing a portion of inlet/outlet tube 550.

In a preferred arrangement, inner bladder **220** is a liquid-impermeable material. Inner bladder **220** may be comprised of a single-ply or two-ply thermoplastic, such as a food-grade polyethylene, or other similar thermoplastics which can form a liquid-impermeable and collapsible/deformable liquid container, which may be comprised of varying thicknesses such that liquid-impermeable characteristics are maintained. In a preferred arrangement, outer liner **210** is a liquid-impermeable material, outer liner **210** may be comprised of a thermoplastic, single-ply or two-ply, such as a thermoplastic coated with Polyvinylidene fluoride or polyvinylidene difluoride (PVDF), e.g., the "Soltis 502" made by Ferrari Serge Sas.

Any material known, or hereinafter developed may be used to construct the inner bladder and the outer liner of the liquid container, as long as such material provides waterproof and liquid-impermeable characteristics to prevent leakage from the liquid container when the container is forcibly contained within the frame by the respective baffles and is filled with a liquid.

In a preferrable, but not limiting embodiment, one or more of inner bladder **220** or inlet/outlet tube **550,** may be arranged as single-use and disposable. Although reusable configurations are contemplated within the scope of the appending claims, it should be noted that single-use and disposable embodiments of the aforementioned, has particular benefits, namely, avoidance of the certified wash center fees associated with a wash of a liquid container and also efficiency, meaning that a necessary dry-time of a washed reusable bulk liquid container (e.g., at least two hours for collapsible and expandable designs) is avoided all together. Lastly, a single-use and disposable bulk liquid container is the most sanitary option for transporting bulk liquid cargo.

In a preferred embodiment of apparatus **100,** fluid conduit **200** is arranged to be at least partially positioned within cutout **722** of baffle **700.** Fluid conduit **200** may be comprised of valve **502** and inlet/out tube **550,** which are fluidly connected in a removable manner, providing an inlet and/or outlet, into or out of fluid container **200,** specifically inner bladder **220.** As discussed *supra,* inlet/outlet tube **550** is preferably affixed to inner bladder **220** in a water-tight configuration, thus, making inlet/outlet tube **550** the single outlet and inlet to inner blader **220.** Best shown in Figure 5B, a portion of inlet/outlet tube **550** is removably secured to valve **502,** thereby fluidly connecting valve **502** to inner bladder **220.** In some embodiments, valve **502** has first opening **504** and second opening **506.** In some embodiments, inlet/outlet tube **550** comprises elbow **552** which has first opening **554** and second opening **556,** where second opening **556** connects to elongated section **558,** specifically, first end **560** of elongated section **558.** First opening **554** of elbow **552** is arranged to be removably and at least partially seated within second opening **506** of valve **502,** thereby fluidly connecting elbow **552** to valve **502.** First opening **554** of elbow **552** is configured with a cam-lock fitting that is designed to mate with a corresponding cam-lock fitting of second opening **506** of valve **502.** First opening **504** of valve **502** may also be configured with a cam-locking fitting that is designed to removably connect to an external conduit, allowing fluid to be pumped into inner blade **220** or to allow fluid to be pumped out of inner bladder **220.** Opposite first end **560** of elongated section **558** is second end **562,** which is positioned within inner blade **220** proximate floor **3.** First end **560** and second end **562** define the respective openings of elongated section **558.** Preferably, second end **562** also includes plurality of apertures **564** therein, proximate second end **562** and circumscribing elongated section **558,** allowing fluid to enter elongated section **558** is second end **562** is abutting an internal surface of inner bladder **220.** In one possible arrangement, inner bladder **220** may include buffer **400,** positioned directly below end **562** of elongated section **558,** and preferably having a greater diameter than end **562.** Buffer **400** is comprised of one or more of an additional layer of material, which may be the same material as inner bladder **220,** or a thicker material than inner bladder **220,** e.g., the same material as outer liner **210,** and serves as an additional layer of protection for inner bladder **220** such that end **562** of elongated section **558** cannot puncture, tear, etc., inner blade **220** when end **562** is resting on the internal surface of inner bladder **220.**

In a preferred embodiment, valve **502** is affixed to movable plate **602,** which is translatably attached to mounting plate **600,** where mounting plate **600** is connected to rear wall **110.** Movable plate **602** is arranged within mounting plate **600** and can be selectively translated in the vertical direction, thereby moving valve **502** and a connected inlet/outlet tube **550** up and down. Therefore, in use, end **562** of elongated section **558** can be lowered such that end **562** touches the internal surface of inner bladder **220,** specifically buffer **400,** or can be raised such that there is a space between end **562** of elongated section **558** and the internal surface of inner bladder **220,** specifically buffer **400.** In use, when fluid is pumped into inner bladder **220** via valve **502** and inlet/outlet tube **550,** it is preferable that end **562** is raised to allow the least resistance of the fluid filling inner bladder **220.** When fluid is removed from inner bladder **220,** via valve **502** and inlet/outlet tube **550,** it is preferable that end **562** is lowered to contact buffer **400** or the internal surface of inner bladder **220,** allowing plurality of apertures **564** of elongated section to be positioned at the lowest possible point to afford the highest level of fluid evacuation of inner bladder **220.** The vertical translation afforded by movable plate **602,** e.g., lowering end **562,** along with the force of baffles **300** and **302** being applied onto inner bladder **220,** allows a substantially complete emptying of fluid from inner bladder **220,** unlike a simple gravity-fed outlet of prior solutions.

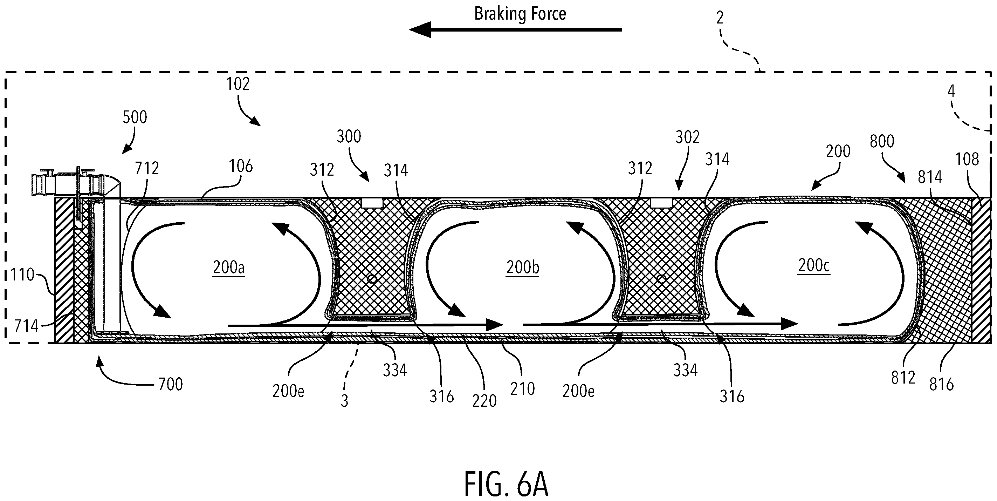

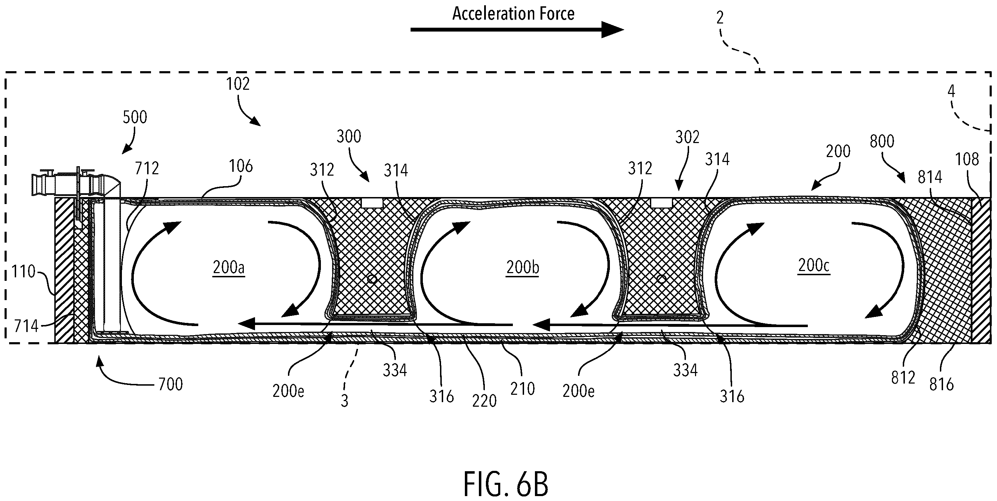

The following description should be taken in view of the aforementioned figures and Figures **6A** through **6B****,** which generally is the cross-sectional view of Figure **5** generally illustrating fluid movement within fluid container **200** of apparatus **100.** Specifically, Figure **6A** generally shows how fluid moves and interacts with baffles **300, 302, 700,** and **800** within fluid container **200** when shipping container **2** is subjected to braking force and Figure **6B** generally shows how fluid moves and interacts with baffles **300, 302, 700,** and **800** within fluid container **200** when shipping container **2** is subjected to acceleration force. Each of the end baffles, baffles **700** and **800** have one concave face, concave faces **712** and **812,** respectively. Each of the middle baffles, baffles **300** and **302** have a pair of oppositely facing concave faces, concave faces **312** and **314.** All of the concaves faces are designed to substantially redirect fluid within liquid container **200** away from the respective concave faces and in a direction towards floor **3** of shipping container **2.** This configuration substantially reduces the liquid sloshing effect and the forces associated therewith, when shipping container **2** has braking (declaration) forces and acceleration forces applied thereto. Additionally, the sections created by baffles **300** and **302** prevent a substantial amount of fluid or liquid within liquid container **200** from flowing towards front wall **108** when a braking force is applied to shipping container **2** or from flowing towards rear wall **110** when an acceleration force is applied to shipping container **2.** Instead, less fluid or liquid travels between sections **200a, 200b,** and **200c** via passages **200d** and **200e** formed by passageways **334** of baffles **300** and **302,** further reducing the force the liquid or fluid may impart on shipping container at either ends thereof. Meanwhile, as shown in Figure **4****,** the retaining members are also applying a downward force on fluid container **200,** along with baffles **300** and **302,** which helps maintain a lower center of gravity of the liquid within liquid container **200.** All of these aspects of apparatus **100** provide for a safer method of transporting bulk liquid cargo within a shipping container.

It will be appreciated that various aspects of the disclosure above and other features and functions, or alternatives thereof, may be desirably combined into many other different systems or applications. Various presently unforeseen or unanticipated alternatives, modifications, variations, or improvements therein may be subsequently made by those skilled in the art which are also intended to be encompassed by the following claims.

### LIST OF REFERENCE NUMERALS

- **2**: Shipping container
- **3**: Floor
- **4**: Front wall
- **6**: Side wall
- **8**: Side wall
- **9**: Ceiling
- **10**: Rail
- **12**: Hooks
- **100**: Liquid transporting container apparatus
- **102**: Frame
- **104**: Side wall
- **106**: Side wall
- **108**: Front wall
- **110**: Rear wall
- **112**: Pin
- **114**: Pin
- **120**: Adjustable connector
- **122**: Hook
- **124**: Housing
- **126**: Spool
- **128**: Rod
- **130**: Tether
- **132**: Loop
- **200**: Collapsible liquid container
- **200a**: Section
- **200b**: Section
- **200c**: Section
- **200d**: Passage
- **200e**: Passage
- **210**: Outer liner
- **212**: Seal
- **214**: Seam
- **220**: Inner bladder
- **222**: Seal
- **224**: Seam
- **226**: Bottom
- **250**: Retraction line
- **252**: Clips
- **300**: First baffle
- **302**: Second baffle
- **310**: Top face
- **312**: First concave face
- **314**: Second concave face
- **316**: Bottom face
- **318**: First side face
- **320**: Second side face
- **322**: Channel
- **324**: Support beam
- **326**: First handle
- **328**: Second handle
- **330**: First extension
- **332**: Second extension
- **334**: Passageway
- **336**: Internal support member
- **400**: Buffer
- **500**: Fluid conduit
- **502**: Valve
- **504**: First opening
- **506**: Second opening
- **550**: Inlet/outlet tube
- **552**: Elbow
- **554**: First opening
- **556**: Second opening
- **558**: Elongated section
- **560**: First end
- **562**: Second end
- **564**: Plurality of apertures
- **600**: Mounting plate
- **602**: Movable plate
- **700**: Rear end baffle
- **710**: Top face
- **712**: Concave face
- **714**: Planar face
- **716**: Bottom face
- **718**: First side face
- **720**: Second side face
- **722**: Cutout
- **724**: Internal support member
- **800**: Front end baffle
- **810**: Top face
- **812**: Concave face
- **814**: Planar face
- **816**: Bottom face
- **818**: First side face
- **820**: Second side face
- **822**: Internal support member
- **900**: Retaining cover
- **902**: Slot
- **904**: Slot
- **906**: Slot
- **908**: Slot
- **910**: Sleeve
- **912**: Sleeve
- **914**: Support member
- **916**: Support member
- **D**: Distance
- **FE**: Front end
- **L1**: Length
- **L2**: Length
- **L3**: Length
- **L4**: Length
- **L5**: Length
- **L6**: Length
- **LD1**: Longitudinal direction
- **LD2**: Longitudinal direction
- **RE**: Rear end
- **SE1**: Side end
- **SE2**: Side end
- **TD1**: Transverse direction
- **TD2**: Transverse direction
- **VD1**: Vertical direction
- **VD2**: Vertical direction

## Claims

1. An apparatus for use in a shipping container for selectively carrying solid freight and bulk liquid freight, comprising:
a first side frame extending longitudinally with respect to said shipping container and fixedly secured thereto;
a second side frame extending longitudinally with respect to said shipping container and fixedly secured thereto;
a front frame positioned between said first and second side frames;
a collapsible liquid container operatively arranged substantially between said first and second side frames, comprising:
a liquid impermeable outer liner;
a liquid impermeable inner bladder arranged within said outer liner; and,
a fluid conduit in fluid communication with said inner bladder;
a rear fame removably affixed to said first and second side frames opposite said front frame; and,
at least one baffle operatively arranged to be positioned between said first and second side frames and on top of said collapsible liquid container, wherein said collapsible liquid container is adapted to be removably pinned at least partially within said frame via said at least one baffle.

2. The apparatus recited in Claim 1 further comprising:
a first baffle operatively arranged to be positioned between said first and second side frames and on top of said collapsible liquid container; and,
a second baffle operatively arranged to be positioned between said first and second side frames and on top of said collapsible liquid container and spaced apart from said first baffle.

3. The apparatus recited in Claim 2, wherein each of said first and second baffles comprise:
a top face and a bottom face bounded by a pair of side faces;
a pair of concave faces disposed between said top and bottom faces; and,
a channel arranged within said pair of concave faces and said bottom face.

4. The apparatus recited in Claim 2, wherein each of said first and second baffles comprise:
a channel disposed within said top and said pair of side faces, said channel operatively arranged to accept a support member therein.

5. The apparatus recited in Claim 1 further comprising:
a front end baffle arranged at least partially within said frames and proximate said front frame, said front end baffle having:
a top face and bottom face bounded by a pair of side faces;
a concave face disposed between said top and bottom faces and facing said rear frame; and,
a rear face disposed between said top and bottom faces and facing said front frame.

6. The apparatus recited in Claim 1 further comprising:
a rear end baffle arranged at least partially within said frames and proximate said rear frame, said rear end baffle having:
a top face and bottom face bounded by a pair of side faces;
a concave face disposed between said top and bottom faces and facing said rear frame;
a rear face disposed between said top and bottom faces and facing said rear frame; and,
a conduit channel disposed within said top, bottom, and concave face, wherein said conduit channel is adapted to accept said at least a portion of said fluid conduit at least partially therein.

7. The apparatus recited in Claim 1 further comprising:
at one retaining cover adapted to at least partially cover a space disposed between said side frames, said at one retaining cover retractably secured to a top surface one of said side frames and removably secured to a top surface of the opposite side frame, said at least one retaining cover further adapted to pin said at least one baffle onto said liquid container.

8. The apparatus recited in Claim 1, wherein said fluid conduit further comprises:
a longitudinal tube portion having a first end and a second end, said first end arranged within said inner bladder and said second end extending through said inner bladder and affixed thereto; and,
a connection elbow extending from said first end.

9. The apparatus recited in Claim 3, further comprising:
a valve affixed to said front frame and arranged to removably secure to said connection elbow.

10. The apparatus recited in Claim 9, further comprising:
a sliding plate connected to said rear frame and adapted to move vertically, said valve affixed to said sliding plate.

11. The apparatus recited in Claim 1, wherein said at least one baffle is configured to absorb energy from liquid disposed in said collapsible liquid container.

12. The apparatus recited in Claim 3, wherein said baffles are comprised of one or more of an open cell foam or a closed cell foam.

13. The apparatus recited in Claim 5, wherein said rear end baffle is comprised of one or more of an open cell foam or a closed cell foam.

14. The apparatus recited in Claim 5, wherein said front end baffle is comprised of one or more of an open cell foam or a closed cell foam.

15. The apparatus recited in Claim 1 further comprising:
a retraction line removably secured to said liquid container, said retraction line adapted to be secured to an inner surface of a wall of the shipping container, thereby allowing said fluid container to be pulled along said retraction line in a direction towards said front frame when said fluid container is empty.
